Europäisches Patentamt

**European Patent Office**

Office européen des brevets

(19)

(11) Veröffentlichungsnummer: **0 006 405**
**B2**

(12) **NEUE EUROPÄISCHE PATENTSCHRIFT**

(45) Veröffentlichungstag der neuen Patentschrift:
**10.10.84**

(51) Int. Cl.³: **F 16 D 65/08**

(21) Anmeldenummer: **78100301.7**

(22) Anmeldetag: **04.07.78**

---

(54) **Niederhaltefeder zum Andrücken der Bremsbacken an den Bremsschild bei Trommelbremsen.**

---

(43) Veröffentlichungstag der Anmeldung:
**09.01.80 Patentblatt 80/1**

(45) Bekanntmachung des Hinweises auf die Patenterteilung:
**25.11.81 Patentblatt 81/47**

(45) Bekanntmachung des Hinweises auf die Entscheidung
über den Einspruch:
**10.10.84 Patentblatt 84/41**

(84) Benannte Vertragsstaaten:
**DE FR GB SE**

(56) Entgegenhaltungen:
**DE - B - 1 168 179**
**DE - B - 1 555 173**
**DE - U - 1 865 388**
**DE - U - 1 908 499**
**US - A - 2 557 820**
**US - A - 3 308 909**
**US - A - 3 958 674**
**US - A - 3 998 303**

(73) Patentinhaber: **Adam Opel Aktiengesellschaft,**
**Bahnhofsplatz 1 Postfach 1560, D-6090 Rüsselsheim**
**(DE)**

(72) Erfinder: **Oppelt, Werner, Schweriner Strasse 5,**
**D-6097 Trebur-Astheim (DE)**
Erfinder: **Guthmann, Herbert, Ing. (grad.), Im Attich 23,**
**D-6094 Bischofsheim (DE)**

(74) Vertreter: **Baumgarten, Jochem, Dipl.-Ing. et al, C/O**
**Adam Opel Aktiengesellschaft**
**Bahnhofsplatz 1 Postfach 1560, D-6090 Rüsselsheim**
**(DE)**

## Beschreibung

Die Erfindung bezieht sich auf eine Niederhaltefeder zum Andrücken der Bremsbacken an den Bremsschild bei Trommelbremsen mit einem aus einem federnden Werkstoff, insbesondere Federdraht, bestehenden federnden Abschnitt, der sich auf der einen Seite des Bremsbackensteges befindet, und mit einem Verbindungssteg, dessen freies Ende zur Verbindung mit dem Bremsschild ausgebildet ist, wobei vom Verbindungssteg ein Schenkel etwa im rechten Winkel abgebogen ist, an den sich der federnde Abschnitt anschließt.

Bei einer bekannten Niederhaltefeder besteht der auf der einen Seite des Bremsbackensteges sich befindliche und aus Federdraht bestehende Abschnitt aus einer Schraubendruckfeder, die von einem mit dem Verbindungssteg verbundenen Federteller gegen den Bremsbackensteg gedrückt wird. Diese Niederhaltefeder ergibt eine bedeutende Bauhöhe über dem Bremsbackensteg, so daß es nicht möglich ist, den Handbremshebel so anzuordnen, daß er sich in einer Ebene über der Niederhaltefeder bewegen kann. Vielmehr kann der Handbremshebel, da seine Ebene innerhalb der Höhe der Feder liegen muß, sich nur neben der Niederhaltefeder bewegen, was aus Platzgründen manchmal schlecht möglich ist. Außerdem ist die Niederhaltefeder sehr aufwendig. Dasselbe gilt für die gattungsgemäße Niederhaltefeder nach der DE-B-1 555 173, bei der anstelle eines Federtellers die Schraubendruckfeder über eine entsprechende Abbiegung einstückig mit dem Verbindungssteg ausgebildet ist.

Bei einer anderen durch das DE-U-1 865 388 bekanntgewordenen Niederhaltefeder wird der federnde Abschnitt über dem Bremsbackensteg von zwei bügelförmigen Zungen gebildet, die von einem den Verbindungssteg bildenden Streifen abgebogen sind. Diese Feder weist ebenfalls eine größere Bauhöhe über dem Bremsbackensteg auf. Ferner ist sie durch die Biegebeanspruchung in den bügelförmigen Zungen sehr hart, und sie bildet nach Erreichen des Gesamtfederweges keinen definitiven Anschlag für die Bremsbacken, der verhindern soll, daß beim Abziehen der Bremstrommel durch Verklemmen derselben mit den Bremsbacken diese in Abziehrichtung der Bremstrommel über ein größeres Maß mitbewegt werden, wodurch die Bremsbackenstege von den Kolben im Radbremszylinder abgleiten würden.

Ebenfalls keinen solchen Anschlag bildet die Niederhaltefeder nach dem DE-U-1 908 499, bei der der Verbindungssteg als solcher von einer Schraubenzugfeder gebildet ist.

Der Erfindung liegt die Aufgabe zugrunde, eine Niederhaltefeder zu schaffen, die eine entsprechend weiche Federkennung aufweist, die einfach variierbar ist, und die dabei eine niedrige Bauhöhe über dem Bremsbackensteg ergibt. Bei der Demontage der Bremstrommel soll sie darüber hinaus einen Haken bzw. Anschlag zur Begrenzung der Bewegung der Bremsbacken bilden. Ferner soll sie leicht herstellbar und einfach montierbar sein. Ein Oberflächenschutz soll ebenfalls leicht aufgetragen werden können.

Erfindungsgemäß wird diese Aufgabe dadurch gelöst, daß der Verbindungssteg aus zwei nebeneinander angeordneten Stegen besteht, von denen gleichartig erste Schenkel etwa im rechten Winkel abgebogen sind, die nach Erreichen des Gesamtfederweges des federnden Abschnittes unmittelbar als Anschlag für den Bremsbackensteg dienen und daß von den ersten Schenkeln spiegelbildlich zweite Schenkel etwa im rechten Winkel abgebogen sind, die in einer etwa parallel zum Bremsbackensteg liegenden Ebene verlaufen und an die sich dritte Schenkel anschließen, die zum Bremsbackensteg hin geneigt sich im Abstand zu den ersten Schenkeln bis über den Verbindungssteg hinaus zurück erstrecken, wo sie an ihren Enden miteinander verbunden sind und mit ihren verbundenen Enden unter Erzeugung einer Torsionsspannung in den zweiten Schenkeln auf dem Bremsbackensteg aufliegen.

Die dritten Schenkel sind in vorteilhafter Weise in einem Winkel von 10 bis 30° zum Bremsbackensteg geneigt.

Die Erfindung wird anhand von Ausführungsbeispielen näher erläutert. In der Zeichnung zeigt

Fig. 1 eine Ansicht einer Trommelbremse bei abgenommener Bremstrommel mit der erfindungsgemäßen Niederhaltefeder,

Fig. 2 einen Schnitt nach Linie II-II in Fig. 1,

Fig. 3 bis 5 eine Ausführungsform der Niederhaltefeder in drei Ansichten, und

Fig. 6 bis 8 eine weitere Ausführungsform der Niederhaltefeder ebenfalls in drei Ansichten.

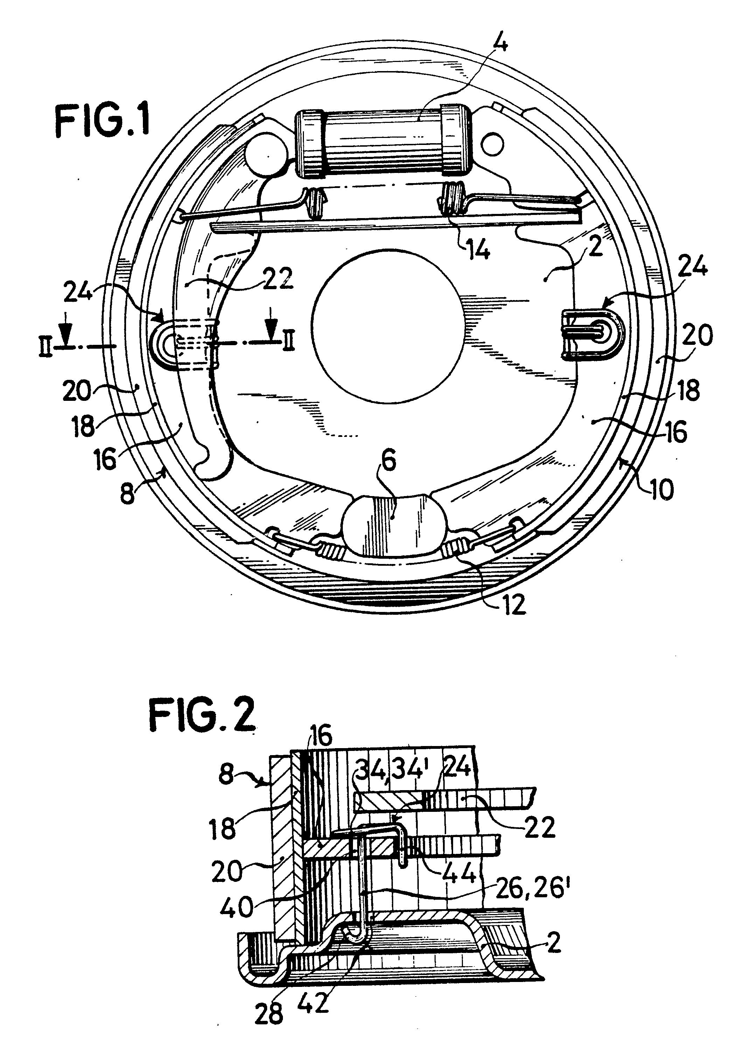

In Fig. 1 sind der Bremsschild mit 2, der daran befestigte Radbremszylinder mit 4 und ein Widerlager mit 6 bezeichnet, an welch letzterem die Bremsbacken 8 und 10 mit einem Ende durch die Wirkung einer Feder 12 anliegen. Mit dem anderen Ende liegen die Bremsbacken 8 und 10 durch die Wirkung der Feder 14 an den Kolben im Radbremszylinder 4 an. Die Bremsbacken 8 und 10 bestehen je aus einem Bremsbackensteg 16, dem Bremsbelagträger 18 sowie dem Bremsbelag 20. Mit 22 ist der Handbremshebel bezeichnet. Die Bremsbacken 8 und 10 werden durch die Niederhaltefedern 24 an den Bremsschild 2 angedrückt.

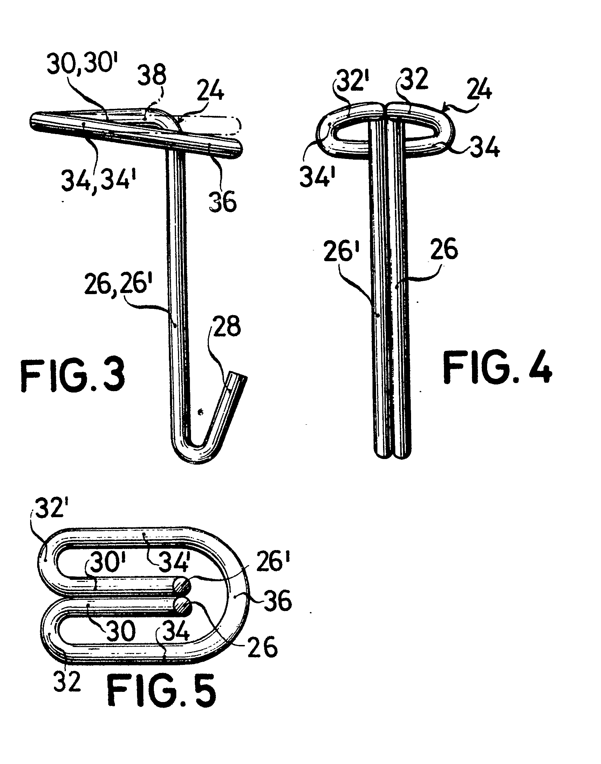

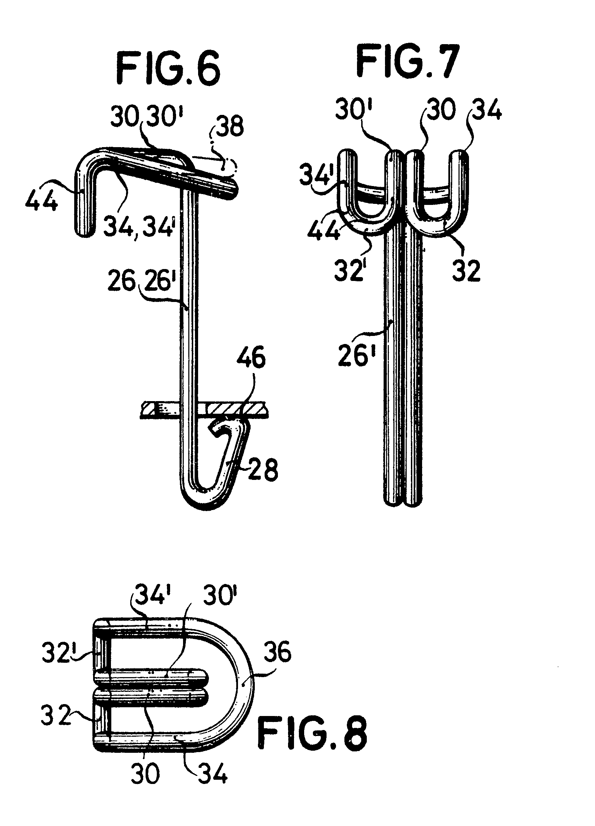

Die Niederhaltefeder 24 besteht aus einem Verbindungssteg, der sowohl in dem Ausführungsbeispiel nach Fig. 3 bis 5 als auch in dem nach Fig. 6 bis 8 von zwei aus Federdraht bestehenden Stegen 26 und 26′ gebildet ist. Die unteren Enden 28 des Verbindungssteges 26, 26′ sind widerhakenförmig abgebogen und sind im eingebauten Zustand hinter dem Bremsschild 2 verhakt, wie Fig. 2 zeigt. Am anderen Ende der Verbindungsstege 26, 26′ ist je ein Schenkel 30 bzw. 30′ rechtwinkelig vom Verbindungssteg abgebogen. Von den Schenkeln 30 und 30′ ist jeweils seitlich ein zweiter Schenkel 32 bzw. 32' abgebogen, der in den Ausführungsbeispielen kreisbogenförmig in einer Ebene parallel zum Bremsbackensteg 16 verläuft. Die Schenkel 32, 32' bilden jeweils den Übergang zu den dritten Schenkeln 34 bzw. 34'. Die Schenkel 34, 34' verlaufen in Draufsicht nach Fig. 5 parallel zu den Schenkeln 30, 30' und erstrecken sich nach rechts bis über die Verbindungsstege 26, 26' hinaus, wo sie durch ein Bogenstück 36 miteinander verbunden sind. Die Schenkel 34, 34' sind im Ausgangszustand zum Bremsbackensteg 16 hin in einem Winkel von etwa 15° geneigt.

Zum Einbau der Niederhaltefeder 24 wird deren Verbindungssteg 26, 26' mit dem Ende 28 zunächst durch die Bohrung 40 im Bremsbackensteg 16 gesteckt, bis das Ende 28 über der Bohrung 42 des Bremsschildes 2 liegt. Dann wird durch einen Schlag von oben auf die Niederhaltefeder das Ende 28 durch die Bohrung 42 hindurchgetrieben, das sich somit am Bremsschild 2 verhakt. Dadurch werden auch die Schenkel 34, 34' in die in Fig. 3 mit strichpunktierten Linien 38 gezeichnete vorgespannte Lage gebracht. Die Schenkel 32, 32' werden im eingebauten Zustand der Niederhaltefeder auf Torsion beansprucht und ergeben den Federweg für die Schenkel 34, 34', deren Bogenstück 36 auf dem Bremsbackensteg 16 aufliegt.

Die Federkennung bzw. Federrate ist derart, daß bei einer Toleranz in dem Maß zwischen Bremsschild und Bremsbackensteg von etwa ± 0,8 mm nur etwa ± 10% Abweichung in der Federkraft auftritt, wenn von einer durchschnittlichen Federkraft von 10 kg ausgegangen wird.

Die Schenkel 30, 30' dienen als Anschlag für die Bremsbackenstege, wenn der Gesamtfederweg der Niederhaltefeder erreicht ist, was z. B. beim Abziehen der Bremstrommel geschehen kann, wenn diese die Bremsbacken beim Abziehen durch Verkanten o. dgl. mitbewegen sollte. Ein Aufbiegen der Schenkel 30, 30' ist bei der auftretenden Kraft nicht gegeben, wie überhaupt die Federung nicht durch Biegung in den Schenkeln, sondern in ausschlaggebendem Maße nur durch Verdrehung in den Schenkeln oder Teilen davon erreicht wird.

Die Niederhaltefeder 24 nach der Fig. 3 bis 5 wird wegen der Ausdehnung der Schenkel 34, 34' am zweckmäßigsten so eingebaut, daß die Schenkel 30, 30' und 34, 34' hinsichtlich der Bremsbacken 8 bzw. 10 etwa in tangentialer Richtung verlaufen. Es ist jedoch auch ein Einbau möglich, bei dem die Schenkel 30, 30' und 34, 34' in anderer Richtung verlaufen können. Um jedoch in jeder Bremse eine gleiche Lage der Niederhaltefeder 24 zu gewährleisten, sind an dieser, wie in Fig. 6 bis 8 gezeigt, die Schenkel 30, 30' und 34, 34' nahe der Schenkel 32, 32' nach unten parallel zu dem Verbindungssteg 26, 26' abgebogen. Die Abbiegung ist mit 44 bezeichnet. Wie Fig. 1 und 2 zeigen, ist die Niederhaltefeder so eingebaut, daß die Abbiegung 44 neben dem Rand des Bremsbackensteges 16 nach unten verläuft. Durch die Abbiegung 44 ist die Montage der Niederhaltefeder 24 nur in dieser Lage möglich, d. h. die Abbiegung muß schon dann neben dem Rand des Bremsbackensteges 16 liegen, wenn das Ende 28 noch nicht hinter dem Bremsschild 2 verrastet ist. Die Verrastung kommt nicht zustande, wenn das Ende 44 auf dem Bremsbackensteg 16 aufliegt. Die richtige Montage der Niederhaltefeder 24 und ihre Fixierung ist dadurch gewährleistet. Um die Niederhaltefeder 24 leichter wieder ausbauen zu können, ist das widerhakenförmige Ende 28 mit einer z. B. von einer weiteren Abbiegung gebildeten Abrundung 46 versehen.

**Patentansprüche**

1. Niederhaltefeder (24) zum Andrücken der Bremsbacken (8) an den Bremsschild (2) bei Trommelbremsen mit einem aus einem federnden Werkstoff, insbesondere Federdraht, bestehenden federnden Abschnitt (32, 32', 34, 34', 36), der sich auf der einen Seite des Bremsbackensteges (16) befindet, und mit einem Verbindungssteg (26, 26'), dessen freies Ende (28) zur Verbindung mit dem Bremsschild (2) ausgebildet ist, wobei vom Verbindungssteg (26, 26') ein Schenkel (30, 30') etwa im rechten Winkel abgebogen ist, an den sich der federnde Abschnitt anschließt, dadurch gekennzeichnet, daß der Verbindungssteg aus zwei nebeneinander angeordneten Stegen (26, 26') besteht, von denen gleichartig erste Schenkel (30, 30') etwa im rechten Winkel abgebogen sind, die nach Erreichen des Gesamtfederweges des federnden Abschnittes (32, 32', 34, 34', 36) unmittelbar als Anschlag für den Bremsbackensteg (16) dienen und daß von den ersten Schenkeln (30, 30') spiegelbildlich zweite Schenkel (32, 32') etwa im rechten Winkel abgebogen sind, die in einer etwa parallel zum Bremsbackensteg (16) liegenden Ebene verlaufen und an die sich dritte Schenkel (34, 34') anschließen, die zum Bremsbackensteg (16) hin geneigt sich im Abstand zu den ersten Schenkeln (30, 30') bis über den Verbindungssteg (26, 26') hinaus zurück erstrecken, wo sie an ihren Enden miteinander verbunden sind (bei 36) und mit ihren verbundenen Enden unter Erzeugung einer Torsionsspannung in den zweiten Schenkeln (32, 32') auf dem Bremsbackensteg (16) aufliegen.

2. Niederhaltefeder nach Anspruch 1, dadurch gekennzeichnet, daß die dritten Schenkel (34, 34') im Winkel von 10 bis 30° zum Bremsbackensteg (16) geneigt sind.

3. Niederhaltefeder nach Anspruch 1 und 2, dadurch gekennzeichnet, daß die Enden der dritten Schenkel (34, 34') über einen bogenförmigen Abschnitt (36) miteinander verbunden sind.

4. Niederhaltefeder nach Anspruch 1 bis 3, dadurch gekennzeichnet, daß sowohl die ersten (30, 30') als auch die dritten Schenkel (34, 34') nahe der sie verbindenden zweiten Schenkel (32, 32') nach dem Bremsschild (2) zu parallel zum Verbindungssteg (26, 26') abgebogen sind (Fig. 6

bis 8).

5. Niederhaltefeder nach Anspruch 1 bis 4, dadurch gekennzeichnet, daß der Verbindungssteg (26, 26') mit einem widerhakenförmigen Ende (28) zur Verbindung mit dem Bremsschild (16) versehen ist.

## Claims

1. Retaining spring (24) for pressing the brake shoes (8) against the brake backing plate (2) in drum brakes, with a spring portion (32, 32', 34, 34', 36) made of a resilient material, in particular spring wire, and located on one side of the brake shoe web (16), and with a connecting web (26, 26') the free end (28) of which is designed for connection to the brake backing plate (2), wherein an arm (30, 30') which is adjoined by the spring portion is bent approximately at right angles to the connecting web (26, 26'), characterised by the fact that the connecting web consists of two adjacent webs (26, 26'), with first arms (30, 30') which are bent symmetrically and approximately at right angles to the webs (26, 26') and which, when total spring excursion of the spring portion (32, 32', 34, 34', 36) is reached, act directly as a stop for the brake shoe web (16), and with second arms (32, 32') which are bent symmetrically and approximately at right angles to the first arms (30, 30') and which extend in a plane approximately parallel to the brake shoe web (16) and are adjoined by third arms (34, 34') which, inclined towards the brake shoe web (16), extend at a distance from the first arms (30, 30') back to a point beyond the connecting web (26, 26'), where they are joined together at their ends (at 36) and rest on the brake shoe web (16) by their joined ends, creating torsional stress in the second arms (32, 32').

2. Retaining spring according to claim 1, characterised by the fact that the third arms (34, 34') are inclined at an angle of 10 to 30° to the brake shoe web (16).

3. Retaining spring according to claims 1 and 2, characterised by the fact that the ends of the third arms (34, 34') are joined together by an arcuate portion (36).

4. Retaining spring according to claims 1 to 3, characterised by the fact that both the first (30, 30') and the third arms (34, 34') are bent, near the second arms (32, 32') connecting them, parallel to the connecting web (26, 26') in a direction towards the brake backing plate (2) (Figs. 6 to 8).

5. Retaining spring according to claims 1 to 4, characterised by the fact that the connecting web (26, 26') is provided with a barbed end (28) for connection to the brake backing plate (16).

## Revendications

1. Ressort (24) pour l'appui des mâchoires (8) contre la plaque de support (2) de freins à tambour, comprenant un segment élastique (32, 32', 34, 34', 36) en un matériau élastique, en particulier en fil à ressort, se trouvant sur l'un des côtés de l'âme (16) de la mâchoire, et une âme de liaison (26, 26') dont l'extrémité libre (28) est conçue pour être reliée à la plaque de support (2), une branche (30, 30') à laquelle se raccorde le segment élastique partant sous un angle sensiblement droit de l'âme de liaison (26, 26'), caractérisé par le fait que l'âme de liaison est formée de deux âmes (26, 26') disposées côte à côte d'où partent de façon similaire sous un angle sensiblement droit des premières branches (30, 30') qui, lorsque la déformation élastique maximale du segment élastique (32, 32', 34, 34', 36) est atteinte, servent directement de butée pour l'âme (16) de la mâchoire, et que des premières branches (30, 30') partent symétriquement, sous un angle sensiblement droit, des deuxièmes branches (32, 32') qui s'étendent dans un plan sensiblement parallèle à l'âme (16) de la mâchoire et auxquelles se raccordent des troisièmes branches (34, 34') qui reviennent, à distance des premières branches (30, 30'), suivant une direction inclinée par rapport à l'âme (16) de la mâchoire, jusque au-delà de l'âme de liaison (26, 26') où leurs extrémités sont reliées entre elles (en 36) et les extrémités reliées reposent sur l'âme (16) de la mâchoire en produisant un moment de torsion dans les deuxièmes branches (32, 32').

2. Ressort suivant la revendication 1, caractérisé en ce que les troisièmes branches (34, 34') sont inclinées de 10 à 30° par rapport à l'âme (16) de la mâchoire.

3. Ressort suivant la revendication 1 ou 2, caractérisé en ce que les extrémités des troisièmes branches (34, 34') sont reliées entre elles par un segment (36) en arc de cercle.

4. Ressort suivant l'une quelconque des revendications 1 à 3, caractérisé en ce qu'aussi bien les premières branches (30, 30') que les troisièmes branches (34, 34') sont pliées à proximité des deuxièmes branches (32, 32') qui les relient, parallèlement à l'âme de liaison (26, 26'), en direction de la plaque de support (2) (fig. 6 à 8).

5. Ressort suivant l'une quelconque des revendications 1 à 4, caractérisé en ce que l'âme de liaison (26, 26') comporte une extrémité en forme de crochet (28) pour sa liaison avec la plaque de support (2).

0 006 405

FIG.1

FIG.2

FIG.3

FIG.4

FIG.5

# FIG.6

30,30'   38
44
34,34'
26,26'
46
28

# FIG.7

30'   30   34
34'
44
32'   32
26'

# FIG.8

34'   30'
32'
36
32
30   34